# EUROPÄISCHE PATENTANMELDUNG

(11) **EP 3 795 268 A1**
(43) Veröffentlichungstag der Anmeldung: **24.03.2021**
(21) Anmeldenummer: 19198898.9
(22) Anmeldetag: 23.09.2019
(51) Int. Cl.: B21D 22/20, A47G 21/18, B21D 22/28, B21D 53/60, B23D 31/00

(54) **TRINKHALM UND VERFAHREN ZUR HERSTELLUNG EINES TRINKHALMS**

(71) Anmelder: von Feilitzsch, Sophia, 83700 Rottach-Egern (DE)
(72) Erfinder: von Feilitzsch, Sophia, 83700 Rottach-Egern (DE)
(74) Vertreter: Grünecker Patent- und Rechtsanwälte PartG mbB

(57) **Zusammenfassung**

Der erfindungsgemäße Trinkhalm umfasst einen einteiligen, zylindrischen Hohlkörper mit einer ersten axialen Öffnung und einer zweiten axialen Öffnung, wobei die zweite axiale Öffnung der ersten axialen Öffnung gegenüberliegt, und ist dadurch gekennzeichnet, dass der Hohlkörper aus einem Blech ausgebildet ist. Weiterhin wird ein entsprechendes Verfahren zur Herstellung des erfindungsgemäßen Trinkhalms offenbart.

## Beschreibung

### Gebiet der Erfindung

Die Erfindung betrifft einen Trinkhalm und eine Verfahren zur Herstellung eines Trinkhalms.

### Stand der Technik

Ein Trinkhalm ist eine Vorrichtung, um mit dem Mund ein Getränk aus einem Behälter anzusaugen und zu trinken. Trinkhalme werden überwiegend aus Kunststoffmaterial gefertigt und in der Regel nur einmal verwendet und danach weggeworfen. Die Verwendung von Trinkhalmen aus Kunststoffmaterial als Einwegprodukt ist dahingehend nachteilig, dass diese Abfälle beispielsweise in die Meere transportiert werden. Aus Gründen des Umweltschutzes wird in der Europäischen Union ab dem Jahr 2021 die Verwendung von Trinkhalmen aus Kunststoffmaterial als Einwegprodukt verboten sein.

Deshalb stellt sich die Frage nach Alternativen zu den Trinkhalmen aus Kunststoffmaterial. Diesbezüglich sind u.a. wiederverwendbare Trinkhalme aus Glas oder Edelstahl bekannt, die jedoch (z.B. mit entsprechend kleinen Bürsten) sorgfältig gereinigt werden müssen und daher etwa für die Verwendung in Restaurants oder Bars nachteilig sind. Weiterhin sind Einmaltrinkhalme aus Bambus, Papier, röhrenförmigen Nudeln und Stroh bekannt. Diese haben jedoch den Nachteil, dass sie nicht geschmacksneutral sind. Zudem können sie nach einer Benetzung mit dem Getränk aufweichen und instabil werden.

### Beschreibung der Erfindung

Aufgabe der Erfindung ist es, die oben genannten Nachteile zumindest teilweise zu mildern oder zu beseitigen.

Die Aufgabe wird gelöst durch einen Trinkhalm nach Patentanspruch 1.

Der erfindungsgemäße Trinkhalm umfasst einen einteiligen, zylindrischen Hohlkörper mit einer ersten axialen Öffnung und einer zweiten axialen Öffnung, wobei die zweite axiale Öffnung der ersten axialen Öffnung gegenüberliegt, und ist dadurch gekennzeichnet, dass der Hohlkörper aus einem Blech ausgebildet ist. Der Hohlkörper ist im Querschnitt vorzugsweise kreisförmigen, sowohl in Bezug auf den Innenrand als auch den Außenrand und weist in Umfangsrichtung vorzugsweise eine gleichmäßige Dicke des Blechs auf. Alternativ kann auch eine ovale Form des Querschnitts vorgesehen sein.

Der erfindungsgemäße Trinkhalm hat den Vorteil, dass er recycelt werden kann. Analog zu Getränkedosen können die gebrauchten Trinkhalme gesammelt und wieder eingeschmolzen werden, um das Metall des Blechs wiederzuverwerten, beispielsweise um wiederum Blech für erfindungsgemäße Trinkhalme herzustellen.

Der erfindungsgemäße Trinkhalm kann wie folgt weitergebildet werden.

Das Blech kann ein tiefgezogenes und/oder gestrecktes Blech sein. Auf diese Weise kann eine in Umfangsrichtung des Hohlkörpers gleichmäßige Dicke des Blechs erzielt werden. Weiterhin kann der Trinkhalm mit aus der Getränkedosenherstellung bekannten Verfahren produziert werden.

Das Blech kann ein Weißblech oder ein Aluminiumblech umfassen. Somit können Materialien eingesetzt werden, die im Getränkebereich bekannt sind und entsprechend verarbeitet werden können.

Eine Dicke des Blechs kann 0,05 bis 0,5 mm, vorzugsweise 0,05 bis 0,1 mm betragen. Auf diese Weise sind stabile Trinkhalme herstellbar, wobei dennoch nur eine rohstoffschonende Menge an Blechmaterial einzusetzen ist.

Ein Außendurchmesser des Hohlkörpers kann 3 bis 15 mm, vorzugsweise 5 bis 10 mm, höchst vorzugsweise 5 bis 8 mm betragen. Alternativ oder zusätzlich kann eine Länge des Hohlkörpers kann 10 bis 30 cm, vorzugsweise 20 bis 25 cm betragen. Dies sind Maße für üblicherweise verwendete Trinkhalme.

An der ersten axialen Öffnung des Hohlkörpers, vorzugsweise auch an der zweiten axialen Öffnung des Hohlkörpers, kann eine Falzung des Hohlkörpers vorgesehen sein, insbesondere ein nach innen oder außen gefalzter Endabschnitt des Hohlkörpers. Auf diese Weise wird vermieden, dass der Schnittbereich der ersten Öffnung freiliegt und es kann ein abgerundeter Endbereich bereitgestellt werden, um Verletzungen im Mundbereich eines Benutzers zu vermeiden. Bevorzugt können beide axiale Öffnungen mit einer Falzung versehen sein, so dass der Trinkhalm beidseitig verwendbar ist und auch beim Trinken mit der zweiten Öffnung im Mund Verletzungen vermieden werden.

Der Trinkhalm kann weiterhin ein Mundstück umfassen, das an der ersten axialen Öffnung des Hohlkörpers vorgesehen ist, wobei das Mundstück insbesondere auf den Hohlkörper aufgesteckt ist oder zusammen mit dem Hohlkörper gefalzt ist. Weiterhin kann das Mundstück gegenüber dem zylindrischen Hohlkörper abgewinkelt sein. Diese stell eine alternative oder zusätzliche Maßnahme dar, um die Schnittkante auf der Ansaugseite des Trinkhalms abzudecken. Durch eine abgewinkelte Anordnung kann der Trinkhalm in einer beispielsweise auch für Kinder bequemen Position an den Mund geführt werden.

Der Hohlkörper kann auf einer Innenseite und zusätzlich oder alternativ dazu auf einer Außenseite des Hohlkörpers zur Versteifung des Hohlkörpers eine Oberflächenstruktur aufweisen. Die Oberflächenstruktur kann eine eingeprägte Struktur und/oder eine erhabene Struktur sein, und kann insbesondere eine Längsriffelung mit wenigstens einer Längsrille oder einer spiralförmig umlaufenden Rille und/oder eine Querriffelung umfassen.

Die oben genannte Aufgabe wird weiterhin gelöst durch ein Verfahren nach Patentanspruch 10.

Das erfindungsgemäße Verfahren zur Herstellung eines Trinkhalms umfasst die Schritte: Bereitstellen eines Blechzuschnitts, insbesondere einer Ronde; Tiefziehen des Blechzuschnitts in einer zylindrischen Form zu einem einteiligen, einseitig offenen zylindrischen Hohlkörper; und Beschneiden des zylindrischen Hohlkörpers, um einen zylindrischen Hohlkörper mit einer ersten axialen Öffnung und einer zweiten axialen Öffnung herzustellen, wobei die zweite axiale Öffnung der ersten axialen Öffnung gegenüber liegt.

Dabei wird im Schritt des Tiefziehens aus dem Blechzuschnitt ein einseitig offener zylindrischer Hohlkörper (Becherform) erzeugt, wobei die Dicke des Blechs konstant bleibt oder sich nur geringfügig verringert.

Die weiteren Vorteile des erfindungsgemäßen Verfahrens bzw. dessen Weiterbildungen entsprechen jenen, die in Bezug auf die erfindungsgemäße Vorrichtung bzw. dessen Weiterbildungen beschrieben wurden, und es wird daher auf obige Ausführungen verwiesen.

Das erfindungsgemäße Verfahren kann folgendermaßen weitergebildet werden.

Nach dem Tiefziehen kann ein weiterer Schritt des Streckens des zylindrischen Hohlkörpers in axialer Richtung vorgesehen sein. Auf diese Weise wird nach dem Tiefziehen zu der Becherform unter Beibehaltung des Innendurchmessers eine Streckung in Längsrichtung (axiale Richtung) bewirkt, wobei sich eine Verringerung der Wandstärke des Hohlkörpers ergibt.

Das Blech kann ein Weißblech oder ein Aluminiumblech umfassen. Eine Dicke des Blechs kann 0,05 bis 0,5 mm, vorzugsweise 0,05 bis 0,1 mm betragen. Ein Außendurchmesser des Hohlkörpers kann 3 bis 15 mm, vorzugsweise 5 bis 10 mm, höchst vorzugsweise 5 bis 8 mm betragen. Eine Länge des Hohlkörpers kann 10 bis 30 cm, vorzugsweise 20 bis 25 cm betragen.

Das Verfahren kann den folgenden Schritt umfassen: Falzen oder Bördeln eines Endabschnitts des Hohlkörpers an der ersten axialen Öffnung, vorzugsweise zusätzlich auch Falzen oder Bördeln eines Endabschnitts des Hohlkörpers an der zweiten axialen Öffnung, insbesondere Falzen zu einer Innen- oder einer Außenseite des Hohlkörpers.

Das Verfahren kann die folgenden Schritte umfassen: Bereitstellen eines Mundstücks; und Aufsetzen des Mundstücks auf einen Endabschnitt des zylindrischen Hohlkörpers an der ersten axialen Öffnung oder Bördeln des Mundstücks mit dem Endabschnitt des zylindrischen Hohlkörpers an der ersten axialen Öffnung.

Das Verfahren kann den folgenden Schritt umfassen: Versteifen des Hohlkörpers durch Aufbringen einer Oberflächenstruktur auf den Hohlkörper, insbesondere auf eine Innenseite und/oder auf eine Außenseite des Hohlkörpers, wobei das Aufbringen der Oberflächenstruktur vorzugsweise ein Einprägen einer Struktur und/oder einer erhabenen Struktur umfasst, insbesondere eine Längsriffelung mit wenigstens einer Längsrille oder einer spiralförmig umlaufenden Rille und/oder eine Querriffelung.

Weitere Merkmale und beispielhafte Ausführungsformen sowie Vorteile der vorliegenden Erfindung werden nachfolgend anhand der Zeichnung näher erläutert. Es versteht sich, dass diese Ausführungsform nicht den gesamten Bereich der vorliegenden Erfindung erschöpfen kann. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform des erfindungsgemäßen Trinkhalms.
- Fig. 2: zeigt eine zweite Ausführungsform des erfindungsgemäßen Trinkhalms.
- Fig. 3: zeigt eine dritte Ausführungsform des erfindungsgemäßen Trinkhalms.
- Fig. 4: zeigt eine vierte Ausführungsform des erfindungsgemäßen Trinkhalms.
- Fig. 5: zeigt eine Ausführungsform des erfindungsgemäßen Verfahrens zur Herstellung eines erfindungsgemäßen Trinkhalms.

### Ausführungsformen

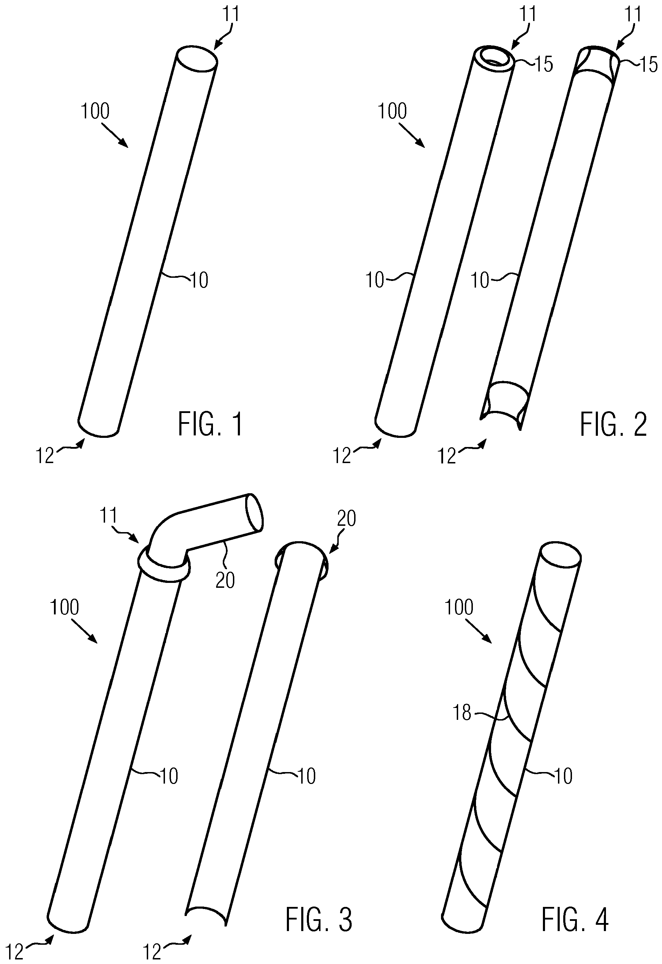

Fig. 1 zeigt eine erste Ausführungsform des erfindungsgemäßen Trinkhalms.

Der erfindungsgemäße Trinkhalm 100 gemäß der ersten Ausführungsform umfasst einen einteiligen, zylindrischen Hohlkörper 10 mit einer ersten axialen Öffnung 11 und einer zweiten axialen Öffnung 12, wobei die zweite axiale Öffnung 12 der ersten axialen Öffnung 11 in axialer Richtung gegenüberliegt. Der Hohlkörper 10 ist aus einem Blech ausgebildet. Der Hohlkörper 10 ist im Querschnitt kreisförmigen, sowohl in Bezug auf den Innenrand als auch den Außenrand und weist in Umfangsrichtung eine gleichmäßige Dicke des Blechs auf.

Der erfindungsgemäße Trinkhalm 100 ist recycelbar. Gebrauchte Trinkhalme können gesammelt und wieder eingeschmolzen werden, um das Material des Hohlkörpers wiederzuverwerten.

Das Blech ist ein tiefgezogenes und gestrecktes Blech. Auf diese Weise kann eine in Umfangsrichtung des Hohlkörpers 10 gleichmäßige Dicke des Blechs erzielt werden. Der Trinkhalm gemäß der ersten Ausführungsform kann mit Verfahren, die aus der Getränkedosenherstellung bekannten sind, hergestellt werden.

Das Blech des Hohlkörpers 10 ist ein Weißblech oder ein Aluminiumblech, wobei eine Dicke zwischen 0,05 bis 0,1 mm beträgt, beispielsweise 0,07 mm. Ein Weißblech ist ein kaltgewalztes Stahlblech dessen Oberfläche mit Zinn beschichtet ist, wobei das Verzinnen insbesondere dem Schutz vor Korrosion dient. Ein solcher Trinkhalm ist trotz der dünnen Wandung stabil. Der Außendurchmesser des Hohlkörpers beträgt 5 bis 10 mm, beispielsweise 6 mm. Die Länge des Hohlkörpers 10 beträgt 20 bis 25 cm. Dies sind Maße für üblicherweise verwendete Trinkhalme.

Fig. 2 zeigt eine zweite Ausführungsform des erfindungsgemäßen Trinkhalms.

Der erfindungsgemäße Trinkhalm 200 gemäß der zweiten Ausführungsform ist gegenüber der ersten zuvor beschriebenen Ausführungsform lediglich dahingehend abgewandelt, dass an der ersten und an der zweiten axialen Öffnung 11, 12 des Hohlkörpers 10 eine Falzung 15 des Hohlkörpers 10 vorgesehen ist. In diesem Beispiel ist dies ein nach innen gefalzter Endabschnitt des Hohlkörpers. Auf diese Weise wird vermieden, dass der Schnittbereich der ersten Öffnung 10 freiliegt und es kann eine abgerundete Umrandung der ersten Öffnung 10 bereitgestellt werden, um Verletzungen im Mundbereich eines Benutzers zu vermeiden. Dadurch, dass an beiden Öffnungen 11, 12 eine Falzung 15 vorgesehen ist, kann der Trinkhalm 200 gefahrlos beidseitig verwendet werden. Dies kann jedoch dahingehend abgewandelt werden, dass nur an einer Öffnung (z.B. der ersten axialen Öffnung 11) eine Falzung vorgesehen ist, wenn beispielsweise die korrekte Orientierung durch eine farbliche Kennzeichnung deutlich wird.

Fig. 3 zeigt eine dritte Ausführungsform des erfindungsgemäßen Trinkhalms.

Der erfindungsgemäße Trinkhalm 300 gemäß der dritten Ausführungsform ist gegenüber der ersten im Zusammenhang mit Fig. 1 beschriebenen Ausführungsform lediglich dahingehend abgewandelt, dass der Trinkhalm ein Mundstück 20 umfasst, das an der ersten axialen Öffnung 11 des Hohlkörpers 10 vorgesehen ist, um die Schnittkante auf der Ansaugseite des Trinkhalms abzudecken. Das Mundstück 20 ist in diesem Beispiel auf den Hohlkörper 10 aufgesteckt. Weiterhin ist das Mundstück 20 gegenüber dem zylindrischen Hohlkörper 10 abgewinkelt, wodurch der Trinkhalm 300 in einer bequemen Position an den Mund geführt werden.

Fig. 4 zeigt eine vierte Ausführungsform des erfindungsgemäßen Trinkhalms.

Der erfindungsgemäße Trinkhalm 400 gemäß der vierten Ausführungsform ist gegenüber der ersten im Zusammenhang mit Fig. 1 beschriebenen Ausführungsform lediglich dahingehend abgewandelt, dass der Hohlkörper 10 zur Versteifung des Hohlkörpers eine Oberflächenstruktur 18 aufweisen. Die Oberflächenstruktur 18 ist in diesem Beispiel eine eingeprägte Struktur in Form einer Spirale.

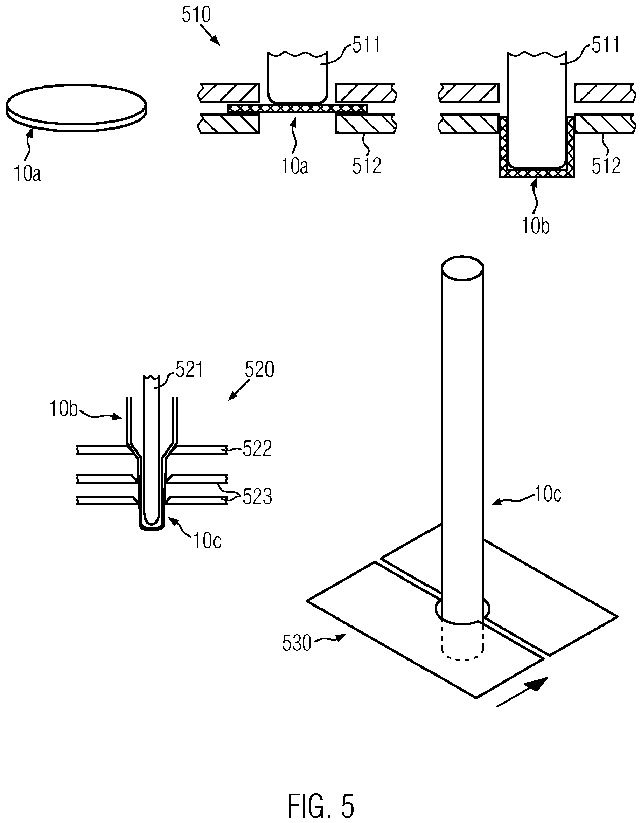

Fig. 5 zeigt eine Ausführungsform des erfindungsgemäßen Verfahrens zur Herstellung eines erfindungsgemäßen Trinkhalms.

Das erfindungsgemäße Verfahren zur Herstellung eines Trinkhalms umfasst in dieser Ausführungsform die folgenden Schritte: Bereitstellen einer Ronde 10a. Dies beinhaltet das Abspulen eines Weißblechbands, und dessen Oberfläche kann mit einem leichten Schmierfilm versehen und kontinuierlich einer Tiefziehpresse 510 zugeführt werden. In einem Werkzeug einer Tiefziehpresse 510 wird zunächst eine Ronde 10a ausgeschnitten. Mit einem Ziehstößel 511 erfolgt über einen Ziehring 512 das Tiefziehen der Ronde 10a zu einem einteiligen, einseitig offenen zylindrischen Hohlkörper (Cup, Napf, Becher) 10b. Dabei bleibt die Dicke des Blechs im Wesentlichen konstant oder verringert sich nur geringfügig.

Nach dem Tiefziehen erfolgt ein weiterer Schritt des Streckens des einseitig offenen zylindrischen Hohlkörpers 10b in axialer Richtung mit einer Abstreckmaschine 520. Auf diese Weise wird der Napf 10b zunächst im Durchmesser reduziert und dann unter Beibehaltung des Innendurchmessers einer Streckung in Längsrichtung (axiale Richtung) unterzogen, wobei sich eine Verringerung der Wandstärke des gestreckten Napfes 10c durch Verringerung des Außendurchmessers ergibt. Der Napf 10b wird der Abstreckmaschine 520 zugeführt. Ein Stößel 521 drückt den Napf 10b zunächst durch einen Nachziehring 522, so dass sein Durchmesser unter Beibehaltung der Blechdicke auf Stößeldurchmesser reduziert wird. Die dem Nachziehring 522 unmittelbar folgenden Abstreckringe 523 bilden jeweils mit dem Stößel einen Spalt, der bei jedem nachfolgenden Abstreckringe 523 kleiner wird, wodurch die Wandstärke des Napfes 10b durch Strecken (Abstrecken) des Weißbleches reduziert wird und der Napf 10c somit verlängert wird.

Anschließend erfolgt durch eine Beschneidemaschine 530 ein Beschneiden des gestreckten Napfes 10c an dessen noch geschlossener Seite (Boden des Napfes 10c), um einen zylindrischen Hohlkörper 10 (wie z.B. in Fig. 1 dargestellt) mit einer ersten axialen Öffnung und einer zweiten axialen Öffnung herzustellen, wobei die zweite axiale Öffnung der ersten axialen Öffnung gegenüberliegt. Ggf. kann auch an der gegenüberliegenden offenen Seite des Napfes 10c ein Beschnitt vorgenommen werden, um einen geraden Rand zu erhalten.

Mit einer Spritzdüse kann auch noch eine Innenlackierung aufgebracht werden, die beispielsweise eine geschmacksverändernde Reaktion eines kohlensäurehaltigen Getränks mit dem Hohlkörper 10 verhindert. Weiterhin kann auch eine Außenlackierung erfolgen.

Das Blech aus dem die Ronde gebildet wird ist hier lediglich beispielhaft ein Weißblech, es kann sich jedoch mit den gleichen obigen Verarbeitungsschritten auch um ein Aluminiumblech handeln. Um eine abschließende Dicke des Hohlkörpers 10 von 0,05 bis 0,1 mm zu erhalten, wird ein Blechmaterial mit einer Dicke von 0,1 bis 0,5 mm verwendet.

Das Verfahren kann in dieser Ausführungsform zudem ein Falzen des Endabschnitts des Hohlkörpers 10 umfassen, um auf diese Weise einen abgerundeten Rand der Öffnung zu erhalten, die beim Trinken mit dem Mund in Berührung kommt.

Die dargestellten Ausführungsformen sind lediglich beispielhaft und der vollständige Umfang der vorliegenden Erfindung wird durch die Ansprüche definiert.

## Patentansprüche

1. Trinkhalm (100), umfassend:
einen einteiligen, zylindrischen Hohlkörper (10) mit einer ersten axialen Öffnung (11) und einer zweiten axialen Öffnung (12), wobei die zweite axiale Öffnung der ersten axialen Öffnung gegenüberliegt,
**dadurch gekennzeichnet, dass**
der Hohlkörper (10) aus einem Blech ausgebildet ist.

2. Trinkhalm nach Anspruch 1, wobei das Blech ein tiefgezogenes und/oder gestrecktes Blech ist.

3. Trinkhalm nach Anspruch 1 oder 2, wobei das Blech ein Weißblech oder ein Aluminiumblech umfasst.

4. Trinkhalm nach einem der Ansprüche 1 bis 3, wobei eine Dicke des Blechs 0,05 bis 0,5 mm, vorzugsweise 0,05 bis 0,1 mm beträgt.

5. Trinkhalm nach einem der Ansprüche 1 bis 4, wobei ein Außendurchmesser des Hohlkörpers 3 bis 15 mm, vorzugsweise 5 bis 10 mm, höchst vorzugsweise 5 bis 8 mm beträgt, und/oder wobei eine Länge des Hohlkörpers 10 bis 30 cm, vorzugsweise 20 bis 25 cm beträgt.

6. Trinkhalm nach einem der Ansprüche 1 bis 5, wobei an der ersten axialen Öffnung des Hohlkörpers, vorzugsweise auch an der zweiten axialen Öffnung des Hohlkörpers, eine Falzung (15) des Hohlkörpers vorgesehen ist, insbesondere ein nach innen oder außen gefalzter Endabschnitt des Hohlkörpers.

7. Trinkhalm nach einem der Ansprüche 1 bis 6, wobei der Trinkhalm weiterhin ein Mundstück (20) umfasst, das an der ersten axialen Öffnung des Hohlkörpers vorgesehen ist, wobei das Mundstück insbesondere auf den Hohlkörper aufgesteckt ist oder zusammen mit dem Hohlkörper gefalzt ist, wobei vorzugsweise das Mundstück gegenüber dem zylindrischen Hohlkörper abgewinkelt ist.

8. Trinkhalm nach einem der Ansprüche 1 bis 7, wobei der Hohlkörper im Querschnitt kreisförmig ausgebildet ist, insbesondere sowohl in Bezug auf den Innenrand als auch den Außenrand, und vorzugsweise in Umfangsrichtung eine gleichmäßige Dicke des Blechs aufweist.

9. Trinkhalm nach einem der Ansprüche 1 bis 8, wobei der Hohlkörper auf einer Innenseite und/oder auf einer Außenseite des Hohlkörpers zur Versteifung eine Oberflächenstruktur (18) aufweist, wobei vorzugsweise die Oberflächenstruktur eine eingeprägte Struktur und/oder eine erhabene Struktur ist, insbesondere eine Längsriffelung mit wenigstens einer Längsrille oder einer spiralförmig umlaufenden Rille und/oder eine Querriffelung.

10. Verfahren zur Herstellung eines Trinkhalms, umfassend die Schritte:
Bereitstellen eines Blechzuschnitts (10a), insbesondere einer Ronde;
Tiefziehen des Blechzuschnitts zu einem einteiligen, einseitig offenen zylindrischen Hohlkörper (10b); und
Beschneiden des zylindrischen Hohlkörpers, um einen zylindrischen Hohlkörper mit einer ersten axialen Öffnung und einer zweiten axialen Öffnung herzustellen, wobei die zweite axiale Öffnung der ersten axialen Öffnung gegenüberliegt.

11. Verfahren nach Anspruch 10, wobei nach dem Tiefziehen ein weiterer Schritt des Streckens des zylindrischen Hohlkörpers (10b) in axialer Richtung vorgesehen ist, wobei insbesondere eine Dicke des zylindrischen Hohlkörpers (10b) reduziert wird.

12. Verfahren nach Anspruch 10 oder 11, wobei das Blech ein Weißblech oder ein Aluminiumblech umfasst; und/oder wobei eine Dicke des Blechs 0,05 bis 0,5 mm, vorzugsweise 0,05 bis 0,1 mm beträgt; und/oder wobei ein Außendurchmesser des Hohlkörpers 3 bis 15 mm, vorzugsweise 5 bis 10 mm, höchst vorzugsweise 5 bis 8 mm beträgt; und/oder wobei eine Länge des Hohlkörpers 10 bis 30 cm, vorzugsweise 20 bis 25 cm beträgt.

13. Verfahren nach einem der Ansprüche 10 bis 12, mit dem weiteren Schritt:
Falzen oder Bördeln eines Endabschnitts (15) des Hohlkörpers an der ersten axialen Öffnung, vorzugsweise auch eines Endabschnitts des Hohlkörpers an der zweiten axialen Öffnung, insbesondere Falzen zu einer Innen- oder einer Außenseite des Hohlkörpers.

14. Verfahren nach einem der Ansprüche 10 bis 13, mit den weiteren Schritten:
Bereitstellen eines Mundstücks (20); und
Aufsetzen des Mundstücks auf einen Endabschnitt des zylindrischen Hohlkörpers an der ersten axialen Öffnung oder Bördeln des Mundstücks mit dem Endabschnitt des zylindrischen Hohlkörpers an der ersten axialen Öffnung.

15. Verfahren nach einem der Ansprüche 10 bis 13, mit dem weiteren Schritt:
Versteifen des Hohlkörpers durch Aufbringen einer Oberflächenstruktur (18) auf den Hohlkörper, insbesondere auf eine Innenseite und/oder auf eine Außenseite des Hohlkörpers, wobei das Aufbringen der Oberflächenstruktur vorzugsweise ein Einprägen einer Struktur und/oder einer erhabenen Struktur umfasst, insbesondere eine Längsriffelung mit wenigstens einer Längsrille oder einer spiralförmig umlaufenden Rille und/oder eine Querriffelung.
